# NEW EUROPEAN PATENT SPECIFICATION

(11) **EP 0 467 667 B2**
(45) Date of publication and mention of the opposition decision: **25.07.2001**
(45) Mention of the grant of the patent: 27.09.1995
(21) Application number: 91306503.3
(22) Date of filing: 17.07.1991
(51) Int. Cl.: H02M 3/07

(54) **Power supply circuit for electronic equipment**
Leistungsversorgungsschaltung für elektronische Geräte
Circuit d'alimentation pour appareillages électroniques

(30) Priority: 18.07.1990 JP 18969090
(43) Date of publication of application: 22.01.1992
(73) Proprietor: SEIKO EPSON CORPORATION, Shinjuku-ku Tokyo (JP)
(72) Inventor: Hayakawa, Motomu, Suwa-shi, Nagano-ken (JP)
(74) Representative: Sturt, Clifford Mark

(56) References cited:
- CH-B- 651 177
- GB-A- 2 158 274
- US-A- 4 730 287
- MICROELECTRONICS, Digital and Analog Circuits and Systems by Jacob Millman, pp.234,235,244-246, International Student Edition, McGraw-Hill, 1979
- "Design of circuits on CMOS chips"-Eric A. Vittoz, IEEE Journal of Solid-State Circuits, vol.SC-20, no. 3, pp.661 and 665, June 1985
- "A multipurpose micropower SC-filter"-M. Degrauwe and F.Salchli, IEEE Journal of Solid-State Circuits, vol.SC-19,no.3, pp.345,346 & 348, June 1984
- "Higher sampling rates in SC circuits by on-chip clock-voltage multiplication" - F. Krummenacher, H. Pinier and A. Guillaume, ESSCIRC '83 Dig. Tech. Papers (Lausanne), pp. 123-126, September 1983

## Description

This invention relates to a power supply circuit for electronic equipment, and especially to a circuit for controlling the power supply for such equipment.

In a conventional power supply circuit for electronic equipment as described in Japanese Laid-Open Patent No. 60-203887, power generating means are provided and a secondary power source, such as a high capacitance condenser (referred to as a capacitor hereinafter), stores the generated electric energy. The voltage from the secondary power source is stepped up by a boosting circuit to provide a main supply voltage. Such an arrangement assures a longer operating time for the electronic equipment.

If the capacitor voltage is designated as a primary voltage and the output voltage from the boosting circuit is designated as a secondary voltage, the secondary voltage is used to generate control signals for the operation of the boosting circuit. However, such an arrangement has various technical problems resulting from the use of switching transistors in the boosting circuit.

When the switching transistors are of the MOSFET type, the current drawn by each transistor can be expressed by the following equations:
In the saturation region,${\text{Id = β (V GS - V TH)}}^{\text{2}} \text{/2}$
In the non-saturation region,${\text{Id = β {(V GS - V TH) V DS - 2 V DS}}^{\text{2}} \text{} /2}$ where V GS is the potential difference between the gate and the source, V TH is the threshold voltage, and V DS is the potential difference between the drain and the source of the transistor, and${\text{β = W/L. µ}}_{\text{n}} {\text{C}}_{\text{ox}}$

Where W is the channel width, L is the channel length, µₙ is the surface migration of electrons, and Cₒₓ is the capacitance of the gate oxide film. As will be explained in greater detail below, when the capacitor voltage reaches a certain voltage level or when the boosted voltage is low, V GS becomes less than V TH in the above equations so that the relevant transistor fails to conduct, terminating the voltage boosting operation. Such a shut down of the power supply is detrimental to the electronic equipment, which employs a capacitor charged by the boosted voltage as the main source of power. As a result, the electronic equipment itself may shut down entirely.

Accordingly, it is an object of the present invention at least in its preferred form to overcome the above problem.

Document US 4,730,287 discloses a circuit for an electric timepiece wherein provision is made for starting the timepiece when a stored voltage is less than the operating voltage of the timepiece.

According to the present invention, there is provided a power supply as claimed in claim 1.

The present invention also relates to electronic equipment characterised by a power supply of this type.

The present invention offers reliable operation of the boosting circuit, even when the capacitor voltage reaches a certain voltage level or when the boosted voltage is low, and hence reduces or avoids the likelihood of the electronic equipment shutting down.

The invention is described further, by way of example, with reference to the accompanying drawings, in which:
Figure 1 is a block diagram showing an embodiment of a power supply circuit according to the present invention applied to an electronic wristwatch;
Figure 2 is a schematic diagram of a first boosting circuit of the power supply circuit shown in figure 1;
Figure 3 is a functional diagram showing different operating states of the first boosting circuit;
Figure 4 is a timing chart for signals generated in the first boosting circuit;
Figure 5 is a graph showing on-state resistance characteristics of switching transistors of the first boosting circuit in the prior art;
Figure 6 is a further graph showing on-state resistance characteristics of the switching transistors of the first boosting circuit in the prior art; and
Figure 7 is a graph showing on-state resistance characteristics of the switching transistors of the first boosting circuit in the present invention.

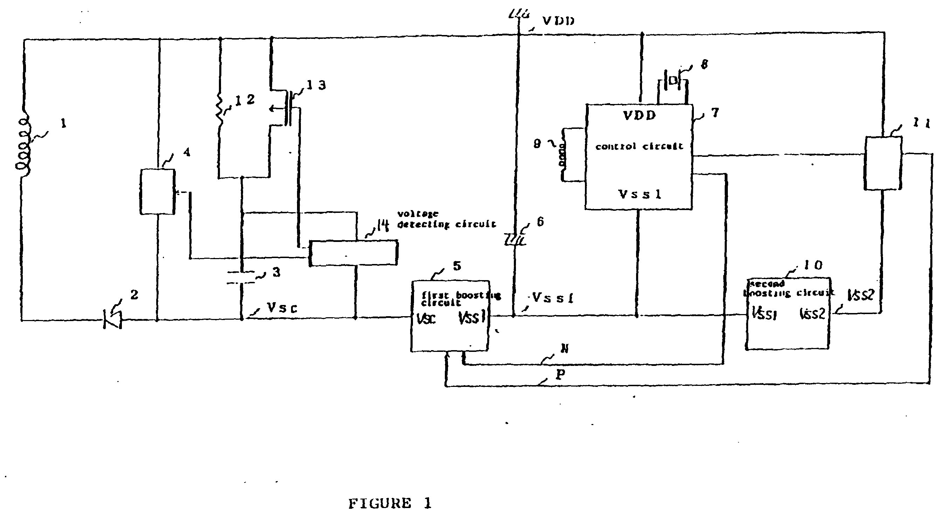

Figure 1 is a schematic diagram of a power supply circuit according to the present invention having a power generating device and being incorporated in an electronic wristwatch.

In figure 1, a power generator coil 1 generates an AC voltage, employing a generating device such as the one described in Japanese Published Patent Application No. 61-093978. A rectifier diode 2 provides half wave rectification of the AC voltage and supplies the rectified voltage to a high capacitance capacitor 3 to charge the same. A limiter 4, serving as a switching device for preventing overcharging of the capacitor 3, is activated at a moment when the voltage V SC at the capacitor 3 reaches a pre-determined voltage level, the limiter 4 then serving as a by-pass for the output from the generator coil 1.

A first boosting circuit 5 steps up the voltage V SC for supply to an auxiliary capacitor 6 for charging the same. A control circuit 7 of the wristwatch is driven by the voltage Vss1 at the auxiliary capacitor 6, the voltage Vss1 being the main source of supply for the wristwatch. The wristwatch further comprises a crystal oscillator 8 serving as the source of a time standard and oscillating at a frequency of 32768Hz; and a coil 9 of a known stepping motor linked to the wristwatch hands to show the time.

A second boosting circuit 10 further steps up the main supply voltage Vss1 to a voltage Vss2 using a known charging technique with a capacitor. The voltage Vss2 output by the second boosting circuit 10 is supplied to a level converter 11, in the form of a known voltage detector, which also receives an input control signal P' at a voltage level corresponding with the voltage Vss1 from the control circuit 7 and converts the signal P' into a control signal P whose voltage level corresponds with the voltage Vss2. The converted control signal P is then supplied by the level converter 11 to the first boosting circuit 5. A control signal N directly from the control circuit 7, whose voltage level corresponds with the voltage Vss1 with no conversion, is also supplied to the first boosting circuit 5.

An immediate start resistor 12 activates oscillation at the start of operation of the wristwatch using the voltage drop thereacross generated by the AC voltage. A transistor 13, which normally remains on except at the start of operation, isolates the immediate start resistor 12 from the charging circuits. A voltage detector 14 controls the on/off operation of both the transistor 13 and the limiter 4, by comparing the voltage V SC of the capacitor 3 with pre-determined voltage thresholds V ON and V LIM at two levels. When V SC < V ON, it is assumed that the operation of the wristwatch is being started and the transistor 13 is switched off. The immediate start resistor 12 is thus rendered effective. When V SC > V ON, it is assumed that a sufficiently high operating voltage has been reached and the transistor 13 is switched on. The voltage threshold V LIM is pre-set to a level near the maximum voltage rating of the capacitor 3 so that, at the moment when V SC becomes greater than V LIM, the limiter 4 is activated to protect the capacitor 3 against overcharging.

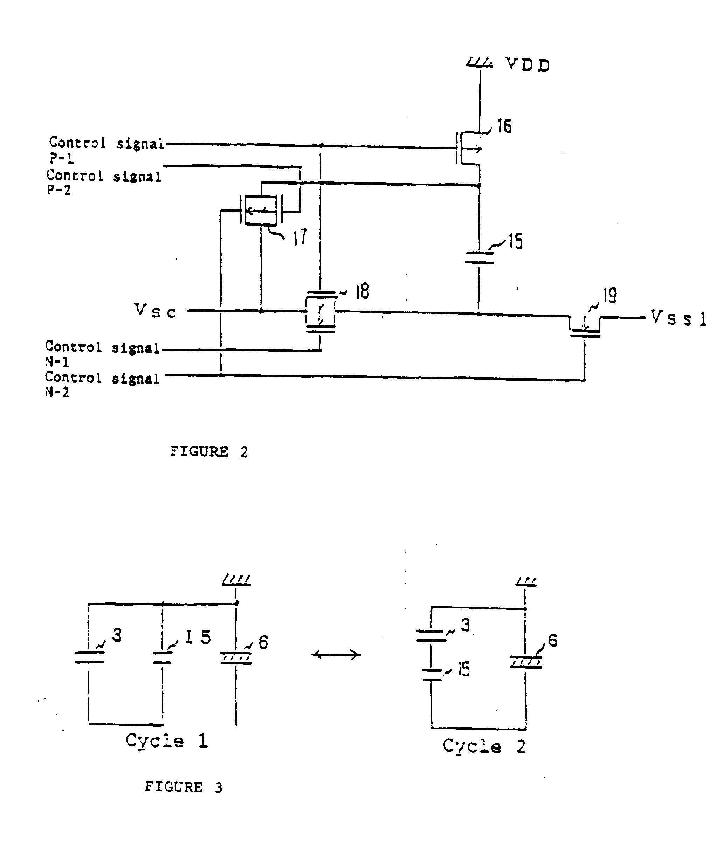

Figure 2 is a schematic diagram of the first boosting circuit 5. A capacitor 15 is used to store the charge in the auxiliary capacitor 3. The charging of the capacitor 15 is effected by alternating between two different connections through an arrangement of MOSFETs 16 to 19, at a timing determined by the input control signals N and P. Figure 3 is a functional drawing of the two connections. This is a known charging technique, by which the voltage Vss1 of the auxiliary capacitor 6 becomes twice the voltage V SC of the capacitor 3.

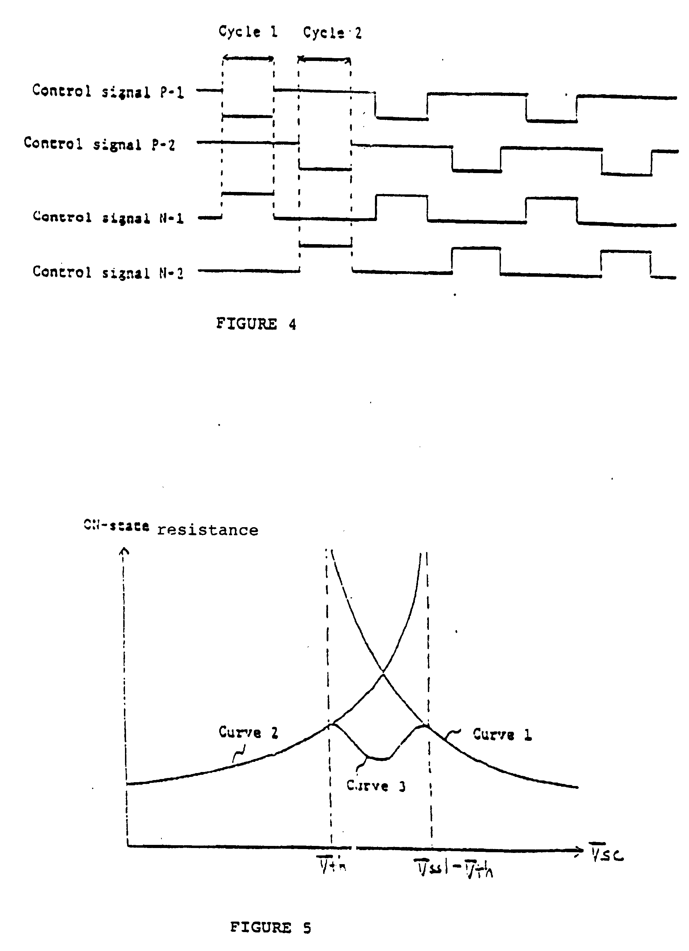

Figure 4 is a timing chart showing the control signals P-1, P-2, N-1 and N-2 supplied to the circuit 5 for control of the on/off operation of the MOSFETs 16 to 19 shown in figure 2 and hence of the charging cycle of the capacitor 15. During cycle 1, both the control signals P-1 and N-1 are in an active state, causing the MOSFETs 16 and 18 to be on. During cycle 2, both the control signals P-2 and N-2 are in an active state, causing the MOSFETs 17 and 19 to be on. This switching allows the two connections to alternate.

In conventional electronic wristwatches, both the control signals P-1 and P-2 are supplied directly from the control circuit 7 without conversion from the level of the voltage Vss1 to the level of the voltage Vss2. The following drawback thus arises:

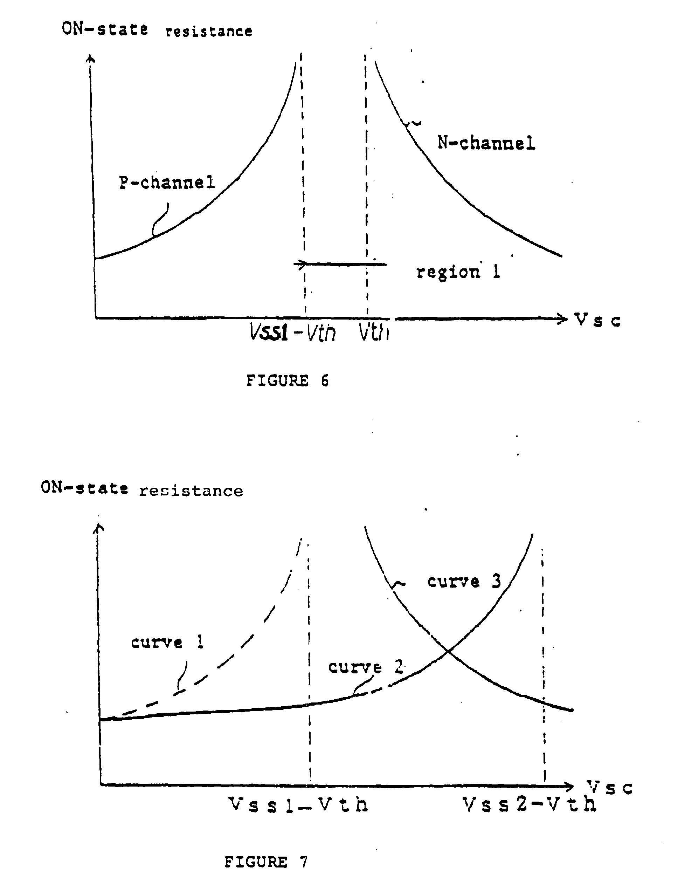

Referring to figure 5, the horizontal axis represents the voltage V SC of the capacitor 3, and the vertical axis represents the on state resistance of the MOSFET 18. The MOSFET 18 employs complimentary P channel and N channel MOSFET devices with the N channel device conducting in the high voltage range of V SC and the P channel device conducting in the low voltage range of V SC. More specifically, the gate voltage in the N channel device becomes a ground voltage V DD in response to the control signal N-1 during cyde 1, the source voltage becomes V SC and the voltage difference V GS between the gate voltage and the source voltage also becomes equal to V SC. Now if V GS, and therefore V SC, is greater than the threshold voltage V TH of the N channel MOSFET device, the N channel device is switched on and current Id flows as equation 1 above suggests. Curve 1 in figure 5 represents the on state resistance characteristic of the N channel MOSFET device, indicating that this device is switched on in the region where V SC > V TH.

The gate voltage in the P channel device becomes the voltage Vss1 in response to the control signal P-1 during cycle 1, the source voltage is V SC and the voltage difference V GS becomes (Vss1 - V SC). According to equation 1, if V GS, and therefore (Vss1 - V SC), is greater than the threshold voltage V TH of the P channel MOSFET device, the P channel device is switched on. Curve 2 in figure 5 represents the on-state resistance of the P channel MOSFET device indicating that this is switched on in the region where (Vss1 - V SC) > V TH, in other words where V SC < (Vss1 - V TH).

Curve 3 in figure 5 represents a composite on-state resistance of the P channel MOSFET device and the N channel MOSFET device. This curve shows that the first boosting circuit 5 functions over the entire range of V SC without the on-state resistance increasing to infinity.

Such a switching arrangement, however, presents two problems. The first takes place because the current Id is dependent on the threshold voltage VTH. If a higher threshold voltage V TH is produced, for example as a result of variation in the amount of ions sputtered in the manufacturing process of an IC including the illustrated circuit, very little current Id can flow as equation 1 suggests. If this happens, the boosting circuit 5 becomes inoperative, which can be very damaging in a system wherein the boosted voltage is the main source of supply.

Figure 6 illustrates an example of such a situation wherein a high threshold voltage V TH occurs and the current Id cannot flow in a region 1 in which the on-state resistance increases to infinity. In the region 1 when the threshold voltage V TH is high, the value (V SC - V TH) for the N channel MOSFET device is negative, and the value (Vss1 - V SC - V TH) for the P channel MOSFET device is negative as well. This means that the two devices are unable to compensate for each other.

Since, conventionally, the entire system operates on the basis of the voltage Vss1, the second problem arises, when the generating device does not operate, as follows: in this instance V SC and Vss1 become lower gradually and, when the voltage Vss1 happens to fall instantaneously, because of motor drive pulse output for example, the value (Vss1 - V SC - V TH) changes from positive to negative again causing the region 1 to be generated and leading to the shutdown of the boosting operation.

To overcome these problems in the present invention, the second boosting circuit 10 and the level converter 11 are provided for converting both the control signals P-1 and P-2 serving as gate control signals for the P channel MOSFET device to the level of the voltage Vss2. The voltage V GS for the P channel MOSFET device thus becomes (Vss2 - V SC). The value (Vss2 - V SC - V TH), in equation 1, can be kept positive, because the voltage Vss2 increases and reaches a voltage level twice that of the voltage Vss1 through the second boosting circuit 10 in figure 1.

Figure 7 illustrates this. Dashed curve 1 in figure 7 represents the conventional case where the P channel MOSFET device is controlled by the voltage Vss1. It should be noted that the on-state resistance then increases to infinity at the threshold line representing the value (Vss1 - V TH). By contrast, curve 2 in figure 7 represents the case in the present invention where switching is controlled by the voltage Vss2. It should be noted that since the threshold line is shifted to a higher voltage at the value (Vss2 - V TH), the composite resistance, including the resistance of the N channel MOSFET device (curve 3), is kept from increasing to infinity.

The above description applies to the MOSFET 17 as well. The voltage V GS becomes (Vss2 - V TH) when the gate control signal P-2 for the P channel MOSFET device is converted to the level of the voltage Vss2 and the voltage V GS for the N channel MOSFET device becomes V TH. The present invention thus provides the same improvement for the MOSFET 17 as in the case of the MOSFET 18.

By boosting the gate control signals before supply to the switching MOSFETs of the boosting circuit 5, a reliable operation over the entire voltage operation of the capacitors is assured for the electronic wristwatch (or other equipment) operating on the basis of the stepped up voltage from the capacitor 3, which offers a substantial advantage over the prior arrangement.

Furthermore, termination of the boosting operation, and hence possible damage to the electronic equipment, is avoided. Since, in the present invention, the threshold voltage of the P channel MOSFET device of the boosting circuit is shifted from (Vss1 - V TH) to (Vss2 - V TH), greater tolerance in the specification requirements for the voltage V TH in the IC manufacturing process becomes possible. Consequently, a higher yield rate is possible in the production of the ICs together with a reduction in cost.

Likewise, the margins against instantaneous voltage drops in the boosting voltage are increased, permitting a greater tolerance in the specifications for the auxiliary capacitor 6, which charges up the voltage Vss1, also. Again, this leads to low cost and small space design requirements.

## Claims

1. A power supply circuit for electronic equipment comprising power generating means (1), a secondary power source (3) for storing an output from the power generating means, said secondary power source (3) supplying a primary voltage (Vsc), and a boosting circuit (5) for stepping the primary voltage up to a secondary voltage (Vss1) for supply to the electronic equipment, and means (7,10,11) for generating at least one control signal (P) for controlling operation of the boosting circuit, characterised in that the at least one control signal (P) is generated at a voltage level (Vss2) higher than that of the secondary voltage (Vss1) and in that the power supply circuit includes an immediate start circuit comprising a resistor (12) a transistor (13) and a voltage detector (14), the resistor and transistor being connected in parallel with each other and in series between the secondary power source and the power generating means, and the voltage detector being connected across the secondary power source to detect the voltage across the secondary power source and being connected to control the transistor to turn the transistor off during the immediate start operation.

2. A power supply circuit according to claim 1 characterised in that the boosting circuit comprises a storage capacitor (15), and switching transistors (16 to 19) operable in response to the at least one control signal for cyclically switching the primary voltage for charging the storage capacitor.

3. A power supply circuit according to claim 1 or 2 characterised in that the means for generating the at least one control signal comprise a further boosting circuit (10) arranged to step the secondary voltage up to said higher level, and a converter (11) arranged to receive input signals at the level of the secondary voltage and coupled to the further boosting circuit so as to convert the received signals into the at least one control signal.

4. A power supply circuit according to claim 3 characterised by a control circuit (7) supplying the input signals to the converter.

5. A power supply circuit according to any preceding claim characterised in that the operation of MOSFETs in said boosting circuit (5) is controlled by said at least one higher voltage control signal (P).

6. Electronic equipment characterised by a power supply circuit according to any preceding claim.

## Patentansprüche

1. Stromversorgungsschaltung für elektronische Geräte, umfassend Energieerzeugungsmittel (1), eine Sekundärenergiequelle (3) zur Speicherung eines Ausgangssignals der Energieerzeugungsmittel, die eine Primärspannung (Vsc) liefert, und eine Spannungserhöhungsschaltung (5) zur Anhebung der Primärspannung auf eine Sekundärspannung (Vssl) für die Einspeisung in das elektronische Gerät sowie Mittel (7, 10, 11) zur Erzeugung wenigstens eines Regelsignals (P) zur Regelung des Betriebs der Spannungserhöhungsschaltung, **dadurch gekennzeichnet**, daß das wenigstens eine Regelsignal (P)auf einem Spannungspegel (Vss2) erzeugt wird, der höher als der der Sekundärspannung (Vss1) ist und daß die Stromversorgungsschaltung eine Sofortstartschaltung mit einem Widerstand (12), einem Transistor (13) und einem Spannungsdetektor (14) umfaßt, wobei der Widerstand und der Transistor miteinander parallel und zwischen der Sekundärspannungsquelle und den Energieerzeugungsmitteln in Reihe geschaltet sind und wobei der Spannungsdetektor über die Sekundärspannungsquelle hinweg angeschlossen ist, um die Spannung über die Sekundärspannungsquelle zu erfassen, und angeschlossen ist, um den Transistor derart zu steuern, daß er den Transistor während des Sofortstartvorgangs ausschaltet.

2. Stromversorgungsschaltung nach Anspruch 1, **dadurch gekennzeichnet,** daß die Spannungserhöhungsschaltung einen Speicherkondensator (15) und von dem wenigstens einen Regelsignal angesteuerte Schalttransistoren (16 bis 19) zum zyklischen Schalten der Primärspannung für die Aufladung des Speicherkondensators umfaßt.

3. Stromversorgungsschaltung nach Anspruch 1 oder 2, **dadurch gekennzeichnet**, daß die Mittel zur Erzeugung des wenigstens einen Regelsignals eine weitere Spannungserhöhungsschaltung (10) zur Anhebung der Sekundärspannung auf den höheren Pegel und einen Eingangssignale auf dem Pegel der Sekundärspannung aufnehmenden und an die weitere Spannungserhöhungsschaltung angekoppelten Umsetzer (11) zur Umsetzung der empfangenen Signale in das wenigstens eine Regelsignal umfassen.

4. Stromversorgungsschaltung nach Anspruch 3, **gekennzeichnet** durch eine die Eingangssignale an den Umsetzer liefernde Regelschaltung (7).

5. Stromversorgungsschaltung nach den vorhergehenden Ansprüchen, **dadurch gekennzeichnet**, daß der Betrieb von MOSFETs in der Spannungserhöhungsschaltung (5) durch das wenigstens eine höhere Spannungsregelsignal (P) geregelt wird.

6. Elektronisches Gerät, **gekennzeichnet durch** eine Stromversorgungsschaltung nach den vorhergehenden Ansprüchen.

## Revendications

1. Circuit d'alimentation en courant pour équipement électronique, comprenant un moyen de production de courant (1), une source de courant secondaire (3) pour stocker une sortie en provenance du moyen de production de courant, ladite source de courant secondaire (3) délivrant une tension primaire (Vsc), et un circuit d'amplification (5) pour faire progresser la tension primaire jusqu'à une tension secondaire (Vss1) pour alimenter l'équipement électronique, et des moyens (7, 10, 11) pour produire au moins un signal de commande (P) pour commander le fonctionnement du circuit d'amplification, caractérisé en ce qu'au moins un signal de commande (P) est produit à un niveau de tension (Vss2) supérieur à celui de la tension secondaire (Vss1) et en ce que le circuit d'alimentation comporte un circuit de démarrage immédiat comprenant une résistance (12) , un transistor (13) et un capteur de tension (14), la résistance et le transistor étant reliés en parallèle l'un à l'autre et en série entre la source de courant secondaire et le moyen de production de courant, et le capteur de tension étant relié à la source de courant secondaire pour détecter la tension sur la source d'alimentation secondaire et relié de manière à commander le transistor à l'arrêt durant l'opération de démarrage immédiat.

2. Circuit d'alimentation en courant selon la revendication 1, caractérisé en ce que le circuit d'amplification comprend une capacité de stockage (15), et des transistors de commutation (16 à 19) pouvant être mis en oeuvre en réponse à l'au moins un signal de commande pour commuter, de façon cyclique, la tension primaire pour charger la capacité de stockage.

3. Circuit d'alimentation en courant selon la revendication 1 ou 2, caractérisé en ce que le moyen pour produire l'au moins un signal de commande comprend un circuit supplémentaire d'amplification (10) agencé pour faire progresser la tension secondaire jusqu'au dit niveau supérieur, et un convertisseur (11) agencé pour recevoir des signaux d'entrée au niveau de la tension secondaire et relié au circuit supplémentaire d'amplification de façon à transformer les signaux reçus en l'au moins un signal de commande.

4. Circuit d'alimentation en courant selon la revendication 3, caractérisé par un circuit de commande (7) délivrant les signaux d'entrée au convertisseur.

5. Circuit d'alimentation en courant selon l'une quelconque des revendications précédentes, caractérisé en ce que le fonctionnement des MOSFET dans ledit circuit d'amplification (5) est commandé par ledit au moins un signal de commande de tension supérieure (P).

6. Equipement électronique caractérisé par un circuit d'alimentation en courant selon l'une quelconque des revendications précédentes.
